# EUROPÄISCHE PATENTSCHRIFT

(11) **EP 1 603 776 B1**
(45) Veröffentlichungstag und Bekanntmachung des Hinweises auf die Patenterteilung: **14.06.2006**
(21) Anmeldenummer: 04712478.9
(22) Anmeldetag: 19.02.2004
(51) Int. Cl.: B60R 21/16, B60R 21/20, B60R 21/26

(54) **INSASSENSCHUTZEINRICHTUNG**
OCCUPANT-PROTECTION DEVICE
DISPOSITIF DE PROTECTION DE PASSAGER

(30) Priorität: 20.02.2003 DE 20303115 U
(43) Veröffentlichungstag der Anmeldung: 14.12.2005
(73) Patentinhaber: TAKATA-PETRI (Ulm) GmbH, 89081 Ulm (DE)
(72) Erfinder: EINSIEDEL, Heinrich, 89077 Ulm (DE)
(74) Vertreter: Baumgärtel, Gunnar
(86) Internationale Anmeldenummer: PCT/DE2004/000331
(87) Internationale Veröffentlichungsnummer: WO 2004/074049

(56) Entgegenhaltungen:
- EP-A- 1 182 099
- DE-A- 19 850 448

## Beschreibung

Die Erfindung bezieht sich auf eine Insassenschutzeinrichtung mit den Merkmalen gemäß dem Oberbegriff des Anspruchs 1.

Eine Insassenschutzeinrichtung ist aus der deutschen Gebrauchsmusterschrift DE 202 16 611 bekannt. Bei dieser vorbekannten Insassenschutzeinrichtung weist der Gasgenerator ein Anschlussrohr auf. An dieses Anschlussrohr ist ein Füllrohr angeschlossen, das zum Aufblasen eines Gassackes der Insassenschutzeinrichtung dient. Das Anschlussrohr des Gasgenerators und das Füllrohr des Gassacks sind ineinander geschoben, sei es derart, dass das Füllrohr auf das Anschlussrohr geschoben ist, oder aber umgekehrt derart, dass das Anschlussrohr auf das Füllrohr geschoben ist. Zur gasdichten Verbindung der beiden Rohre sind diese unter plastischer Verformung zusammengepresst.

Eine Insassenschutzeinrichtung mit den Merkmalen gemäß dem Oberbegriff des Anspruchs 1 ist aus der deutschen Offenlegungsschrift DE 198 50 448 A1 bekannt. Diese Schrift zeigt eine Leiteinrichtung in Form eines Aufsatzes, der auf einen Gasgenerator aufgesetzt ist. Ein Strömungskanal des Aufsatzes steht mit einem T-Stück in Verbindung, das zwei Ausströmöffnungen aufweist, die jeweils in einen Luftsack münden.

Der Erfindung liegt die Aufgabe zugrunde, eine Insassenschutzeinrichtung anzugeben, bei der die Verbindung zwischen einem Gasgenerator der Insassenschutzeinrichtung und einem Füllrohr der Insassenschutzeinrichtung optimiert ist. Insbesondere soll die Einbaubarkeit der Insassenschutzeinrichtung in einem Kraftfahrzeug verbessert werden.

Diese Aufgabe wird bei einer Insassenschutzeinrichtung der eingangs angegebenen Art erfindungsgemäß durch die kennzeichnenden Merkmale des Anspruchs 1 gelöst. Vorteilhafte Ausgestaltungen der Erfindung sind in Unteransprüchen angegeben.

Ein wesentlicher Vorteil der erfindungsgemäßen Irisassenschutzeinrichtung besteht darin, dass sich diese sehr variabel und sehr einfach in einem Kraftfahrzeug einbauen lässt. Da die Verbindung zwischen dem Gasgenerator und dem Füllrohr im Mittenbereich des Füllrohres liegt, ist es nämlich - im Gegensatz zu dem vorbekannten Anschluss des Gasgenerators am Füllrohrende - möglich, die Gasverbindungsstelle je nach den konkreten Anforderungen im Kraftfahrzeug quasi beliebig zu positionieren und deren Lage im Hinblick auf die Erfordernisse im Kraftfahrzeug festzulegen. Die Freiheit, die räumliche Lage des Gasgenerators relativ zum Füllrohr festlegen zu können, basiert also konkret auf der Positionierung des Gasverbindungsbereichs im Mittenbereich anstelle - wie vorbekannt am Rohrende - des Füllrohres.

Ein weiterer wesentlicher Vorteil der erfindungsgemäßen Insassenschutzeinrichtung besteht darin, dass diese sehr platzsparend ist; denn aufgrund der Anbindung des Gasgenerators im Mittenbereich des Füllrohres lassen sich der Gasgenerator und das Füllrohr parallel zueinander ausrichten und sozusagen "übereinander" platzieren. Da üblicherweise ein Gasgenerator eine längliche Form hat, kann aufgrund der parallelen Anordnung zum Füllrohr Montageplatz eingespart werden. Eine solche "parallele" Anordnung lässt sich einfach realisieren, wenn die Abströmöffnung(en) des Gasgenerators im Seitenbereich des Gasgenerators - benachbart zur Seitenwand des Füllrohres - angeordnet werden.

Um zu vermeiden, dass Gas des Gasgenerators nach außen entweichen kann, ist erfindungsgemäß vorgesehen, dass die Gasverbindung zwischen dem Gasgenerator und der Einströmöffnung im Füllrohr derart abgedichtet ist, dass kein Gas nach außen entweichen kann.

Die Verbindung zwischen dem Gasgenerator und dem Füllrohr mit Hilfe des Adapters lässt sich besonders einfach und damit kostengünstig mit einer Klemmverbindung fixieren; es wird daher als vorteilhaft angesehen, wenn der Adapter mittels einer Klemmverbindung zwischen dem Gasgenerator und der Außenwand des Füllrohres eingeklemmt wird.

Eine einfache Klemmverbindung lässt sich beispielsweise mit einer Schelle erreichen; es ist somit vorteilhaft, wenn der Gasgenerator, der Adapter und das Füllrohr mit einer Schelle verbunden, insbesondere aufeinander gepresst, sind.

Wenn eine lösbare Verbindung des Gasgenerators und des Füllrohres gewünscht ist, wird es als vorteilhaft angesehen, wenn eine mit einer Spannschraube spannbare Schelle verwendet wird, da sich derartige Schellen durch Lösen der Spannschrauben ohne weiteres wieder lösen lassen.

Eine sehr feste und sehr zuverlässige Verbindung zwischen dem Gasgenerator, dem Adapter und dem Füllrohr lässt sich bevorzugt auch mit einer Ein-Ohr- oder einer Mehr-Ohr-Klemmschelle, insbesondere einer Zwei-Ohr-Schelle erreichen.

Eine gasdichte Verbindung zwischen dem Gasgenerator und dem Adapter lässt sich einfach und damit vorteilhaft erreichen, wenn im Verbindungsbereich zwischen dem Gasgenerator und dem Adapter die dem Gasgenerator zugewandte Außenseite des Adapters an die äußere Form des Gasgenerators angepasst ist. Bei einer entsprechenden Anpassung der äußeren Formgebung kann beispielsweise auf das Vorsehen separater Dichtungselemente verzichtet werden.

In analoger Weise wird es als vorteilhaft angesehen, wenn im Verbindungsbereich zwischen der Außenwand des Füllrohres und dem Adapter die der Außenwand des Füllrohres zugewandte Außenseite des Adapters an die äußere Form der Außenwand des Füllrohres angepasst ist; denn auch an der Schnittstelle zwischen dem Adapter und dem Füllrohr gilt, dass bei entsprechender Anpassung der äußeren Form gegebenenfalls auf das Vorsehen separater Dichtelemente verzichtet werden kann.

Eine besonders gute Abdichtung zwischen dem Gasgenerator und dem Adapter lässt sich vorteilhaft erreichen, wenn der Gasgenerator - zumindest partiell - einen runden oder ovalen Querschnitt aufweist und die dem Gasgenerator zugewandte Außenseite des Adapters eine rinnenförmige Ausnehmung aufweist, die zur äußeren Form des Gasgenerators komplementär ist.

In entsprechender Weise kann auch die Verbindung zwischen dem Adapter und dem Füllrohr optimiert werden, indem nämlich das Füllrohr - zumindest partiell - mit einem runden oder ovalen Querschnitt versehen wird und die dem Füllrohr zugewandte Außenseite des Adapters eine rinnenförmige Ausnehmung aufweist, die zur äußeren Form des Füllrohres komplementär ist.

Zusätzlich kann zwischen dem Adapter und dem Gasgenerator bzw. zwischen dem Adapter und dem Füllrohr zum Zwecke der Gasabdichtung eine zusätzliche Gasdichtung vorhanden sein. Eine solche Gasdichtung kann vorzugsweise durch einen O-Ring gebildet sein, der in einer ringförmigen Nut des Adapters angeordnet ist.

Um zu erreichen, dass der Gasgenerator im noch nicht eingebauten ("unverbauten") Zustand schubneutral ist, wird es als vorteilhaft angesehen, wenn der Gasgenerator zu jeder für den Anschluss an den oder die Adapter vorgesehene Abströmöffnung jeweils eine gegenüberliegende Abströmöffnung aufweist. Eine solche gegenüberliegende Abströmöffnung kann beim Anschluss des Gasgenerators an den Adapter beispielsweise durch eine Schelle abgedichtet werden. Gegebenenfalls kann ein zusätzliches Dichtelement zum Abdichten der gegenüberliegenden Abströmöffnung(en) eingesetzt werden.

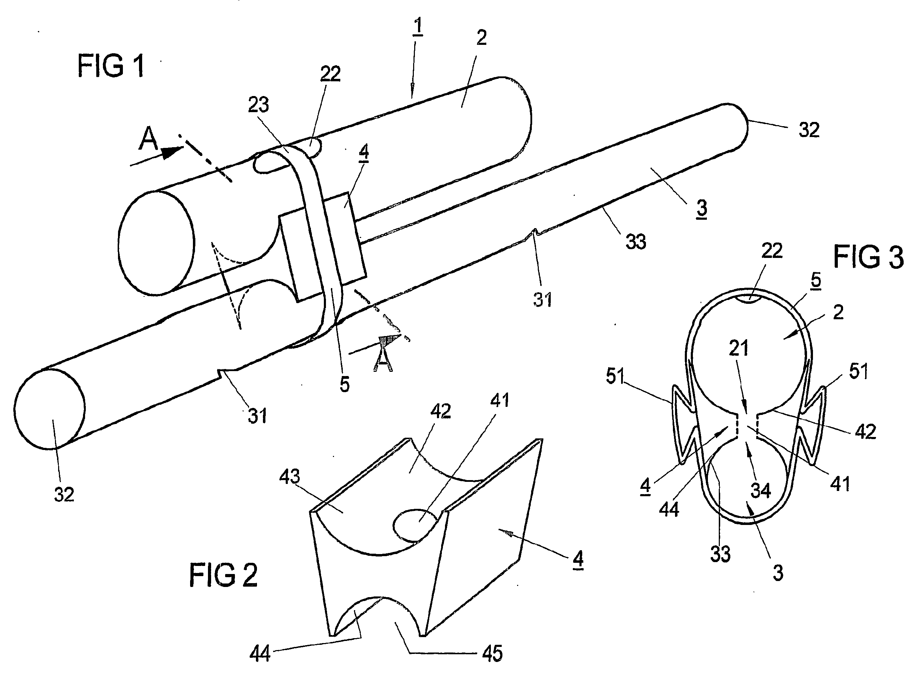

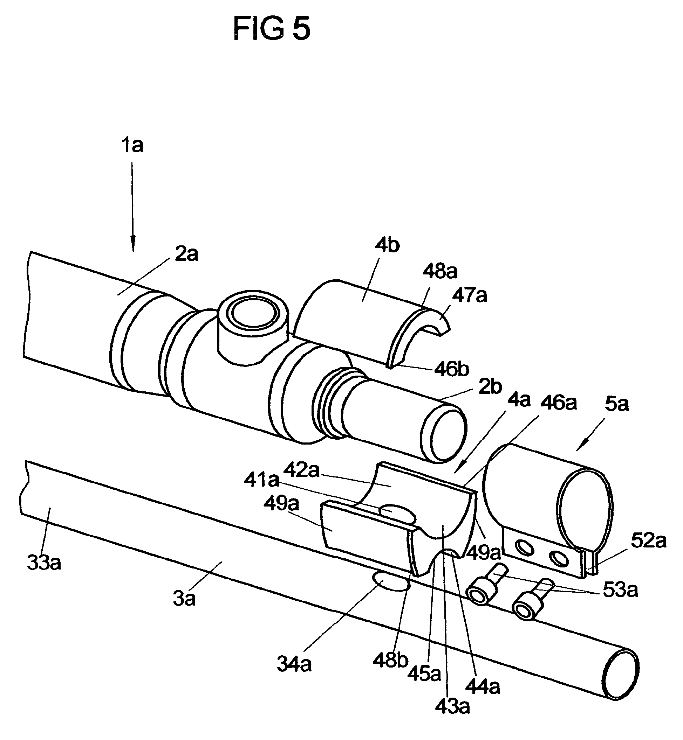

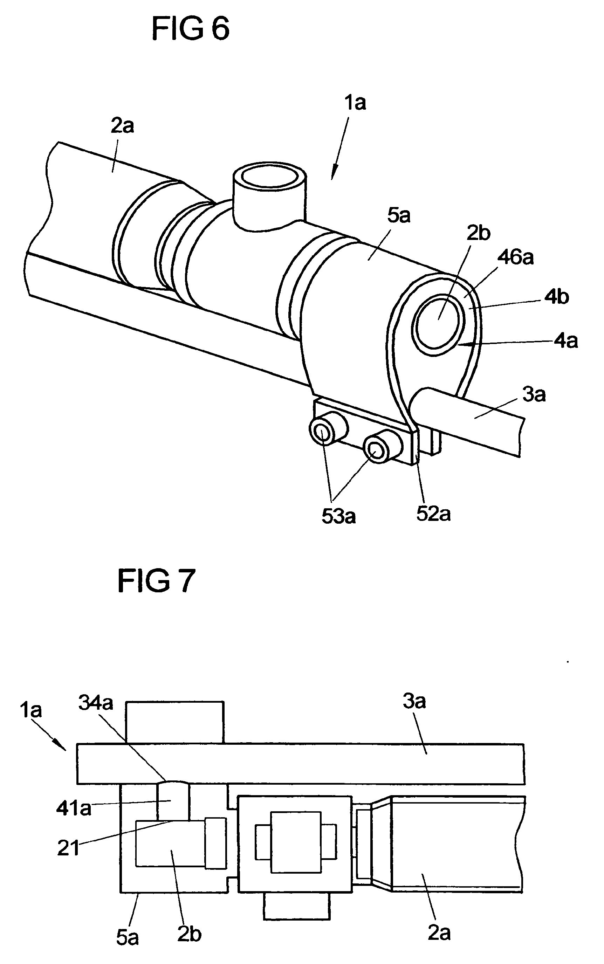

In den Figuren 1 bis 4 ist ein erstes Ausführungsbeispiel für eine erfindungsgemäße Insassenschutzeinrichtung gezeigt. Die Figuren 5 bis 7 zeigen eine zweite Ausführungsform der erfindungsgemäßen Insassenschutzeinrichtung.

In der Figur 1 erkennt man eine Insassenschutzeinrichtung 1, die unter anderem einen Gasgenerator 2 und ein Füllrohr 3 aufweist. Das Füllrohr 3 ist an seiner Außenwand 33 mit Abströmöffnungen 31 ausgestattet, aus denen Gas aus dem Füllrohr 2 in einen in der Figur 1 nicht dargestellten Gassack der Insassenschutzeinrichtung strömen kann. Die beiden Rohrenden 32 des Füllrohrs 3 können offen oder verschlossen sein.

In der Figur 1. erkennt man darüber hinaus einen Adapter 4, der den Gasgenerator 2 und das Füllrohr 3 miteinander verbindet. Der Gasgenerator 2, das Füllrohr 3 und der Adapter 4 werden durch eine Schelle 5 zusammengehalten.

In der Figur 1 ist darüber hinaus erkennbar, dass die Schelle 5 ein Dichtelement 22 gegen den Gasgenerator 2 drückt. Das Dichtelement 22 dichtet dadurch eine Abströmöffnung 23 des Gasgenerators 2 ab.

In der Figur 2 ist die Insassenschutzeinrichtung 1 gemäß der Figur 1 im Querschnitt entlang der Schnittlinie A, A' dargestellt. Man erkennt in der Figur 2 den Gasgenerator 2 mit seiner Abströmöffnung 23, die durch das Dichtelement 22 verschlossen ist. Die Abströmöffnung 23 liegt einer Abströmöffnung 21 des Gasgenerators 2 gegenüber, die dem Adapter 4 zugewandt ist. Konkret ist der Gasgenerator 2 derart ausgerichtet, dass seine Abströmöffnung 21 einem Durchgangsloch 41 des Adapters 4-gegenüber liegt.

Das Füllrohr 3 weist eine Einströmöffnung 34 auf, die ebenfalls dem Durchgangsloch 41 des Adapters 4 zugeordnet ist. Aufgrund dieser Ausrichtung des Gasgenerators 2 relativ zum Füllrohr 3 ist gewährleistet, dass Gas des Gasgenerators 2 aus der Abströmöffnung 21 durch das Durchgangsloch 41 und durch die Einströmöffnung 34 in das Füllrohr 3 gelangen kann.

Zur Abdichtung zwischen dem Gasgenerator 2 und dem Adapter 4 ist die dem Gasgenerator 2 zugewandte Außenseite 42 des Adapters 4 an die äußere Form des Gasgenerators 2 angepasst. Bei dem Ausführungsbeispiel gemäß den Figuren 1 bis 4 ist der Querschnitt des Gasgenerators 2 im Wesentlichen rund bzw. oval, so dass der Adapter an seiner dem Gasgenerator 2 zugewandten Außenseite 42 ebenfalls eine ovale bzw. runde Kontur aufweist. Konkret wird die dem Gasgenerator 2 zugewandte Außenseite 42 des Adapters 4 durch eine rinnenförmige Ausnehmung 43 gebildet, auf die der Gasgenerator 2 aufgesetzt ist. Die rinnenförmige Ausnehmung 43 ist in der Figur 2 dargestellt.

An der Unterseite des Adapters 4 ist dieser dem Füllrohr 3 zugewandt; um dabei eine im Wesentlichen gasdichte Verbindung zwischen dem Füllrohr 3 und dem Adapter 4 zu gewährleisten, ist im Verbindungsbereich zwischen dem Füllrohr 3 und dem Adapter 4 die der Außenwand 33 des Füllrohrs 3 zugewandte Außenseite 44 des Adapters 4 an die äußere Form der Außenwand 33 des Füllrohrs 3 angepasst. Eine dreidimensionale Darstellung des Verbindungsbereiches zwischen dem Füllrohr 3 und dem Adapter 4 lässt sich gut in der Figur 2 erkennen; so ist in der Figur 2 eine rinnenförmige Ausnehmung 45 erkennbar, mit der der Adapter 4 auf das vom Querschnitt her kreisrunde Füllrohr 3 aufgesetzt wird.

Der Adapter 4 ist einstückig ausgebildet. Die rinnenförmigen Ausnehmungen 43 und 45 sind dabei auf den sich gegenüberliegen Außenseiten 42 und 44 des Adapters angeordnet. Das Durchgangsloch 41 ist dabei als Durchgangsbohrung ausgeführt und erstreckt sich zwischen den beiden rinnenförmigen Ausnehmungen 43 und 45.

In der Figur 3 lässt sich darüber hinaus die konkrete Ausgestaltung der Schelle 5 erkennen. Bei der Schelle 5 kann es sich beispielsweise um eine mit einer Spannschraube spannbare Schelle handeln; bei dem Ausführungsbeispiel gemäß der Figur 3 handelt es sich jedoch um eine Zwei-Ohr-Klemmschelle, bei der an zwei Ohrbereichen 51 die Schelle 5 zusammengedrückt und unter Spannung gesetzt wird. Durch dieses Zusammendrücken bzw. Zusammenpressen der Schelle 5 im Bereich der Ohren 51 werden der Gasgenerator 2, der Adapter 4 und das Füllrohr 3 zusammengepresst. Aufgrund der entsprechenden Formanpassung im Verbindungsbereich zwischen dem Gasgenerator 2 und dem Adapter 4 einerseits und dem Adapter 4 und dem Füllrohr 3 andererseits ist eine im Wesentlichen gasdichte Verbindung gewährleistet. Um eine besonders gasdichte Abdichtung zwischen dem Gasgenerator 2, dem Adapter 4 und dem Füllrohr 3 zu gewährleisten, können darüber hinaus zusätzliche Dichtungen vorgesehen sein. Derartige Dichtungen können beispielsweise durch O-Ringe gebildet sein, die in entsprechenden Führungsnuten - beispielsweise im Adapter 4 - eingesetzt sind.

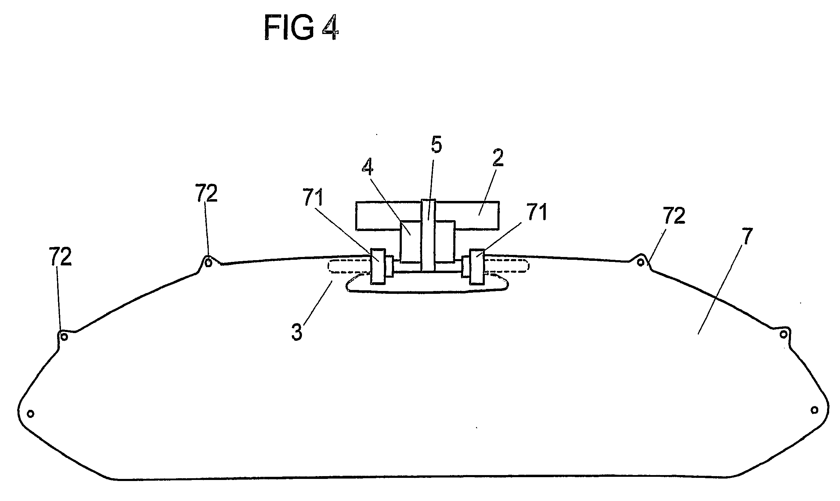

In der Figur 4 erkennt man die Insassenschutzeinrichtung 1 gemäß den Figuren 1 bis 3 im zusammengebauten Zustand, nachdem ein Gassack 7 an das Füllrohr 3 angeschlossen wurde. Das Füllrohr 3 ist mittels zweier Schlauchschellen 71 und 72 an das Füllrohr 3 angeschlossen.

Im Übrigen erkennt man in der Figur 4 den Gasgenerator 2, der mittels des Adapters 4 und der Schelle 5 an das Füllrohr 3 gasdicht angeschlossen ist.

In der Figur 4 lässt sich gut erkennen, dass die Positionierung des Gasgenerators 2 relativ zu dem Füllrohr 3 quasi beliebig ist; denn der Gasgenerator 2 kann an einer beliebigen Stelle der Außenwand 33 des Füllrohres 3 an dem Füllrohr 3 befestigt werden. Es ist daher bei der Insassenschutzeinrichtung gemäß den Figuren 1 bis 4 nicht erforderlich, den Gasgenerator 2 im Bereich eines der beiden Rohrenden 32 des Füllrohres 3 zu platzieren.

Der Gassack 7 lässt sich mit Befestigungsschlaufen 72 an einer Fahrzeugkarosserie befestigen.

Das in den Figuren 5 bis 7 dargestellte Ausführungsbeispiel stellt eine Weiterbildung der ersten Ausführungsform dar. Auch bei dieser Ausführungsform ist ein Adapter 4a zwischen einem Gasgenerator 2a und einem Füllrohr 3a angeordnet und verbindet Abströmöffnungen 21 des Gasgenerators 2a mit einer Einströmöffnung 34a des Füllrohrs 3a. Gasgenerator 2a und Füllrohr 3a weisen dabei alle Merkmale entsprechenden Bauteile der ersten Ausführungsform auf.

Der Adapter 4a ist im wesentlichen gleichartig wie der Adapter 4 ausgebildet. Er umfasst ebenso zwei rinnenartige Ausnehmungen 43a, 45a, die auf gegenüberliegenden Außenseiten 42a, 44a des Adapters 4a angeordnet sind. Die Außenseite 42a des Adapters 4a ist dabei dem Gasgenerator 2a zugewandt, die Außenseite 44a der Außenwand 33a des Füllrohrs 3a. Zwei Längsseiten 49a des Adapters 4a erstrecken sich entlang der Längsachse des Füllrohrs 3a und des Gasgenerators 2a jeweils zwischen den rinnenartigen Ausnehmungen 43a, 45a. Diese Längsseiten 49a sind nach außen, vom Adapter wegweisend, gewölbt. An einer vom Gasgenerator 2a wegweisenden Stirnseite 49b des Adapters 4a, die sich den beiden Längsseiten 49a erstreckt, ist ein Flansch 48b ausgebildet, der über die Längsseiten 49a hinausragt. An den längsseitigen Rändern der rinnenförmigen Ausnehmung 43a ist jeweils eine in Richtung Gasgenerator 2a weisende Auflagefläche 46a des Adapters ausgebildet. Zwischen den rinnenartigen Ausnehmungen 43a 45a erstreckt sich im Innern des Adapters 4a ein Durchgangsloch 41 a, das als Durchgangsbohrung ausgebildet ist. Der Adapter 4a ist einstückig ausgeführt.

Der Adapter 4a ist derart zwischen dem Füllrohr 3a und dem Gasgenerator 2a angeordnet, dass die rinnenartige Ausnehmung 43a der Außenseite 42a des Adapters 4a den Gasgenerator 2a aufnimmt. Der Gasgenerator 2a ist dabei so positioniert, das die Abströmöffnungen 21 des Gasgenerators 2a über dem Durchgangsloch 41a des Adapters 4a liegen. Der Abschnitt des Gasgenerators 2a, der an den Adapter 4a angeschlossen ist, ist in der rinnenförmigen Ausnehmung 43a etwa mit der Hälfte seines Umfanges aufgenommen. Die gegenüberliegende rinnenartige Ausnehmung 45a des

Adapters 4a nimmt das Füllrohr 3a auf, wobei eine Einströmöffnung 34a des Füllrohrs 3a über dem Durchgangsloch 41 a des Adapters 4a liegt.
Zur Befestigung des Adapters 4a zwischen dem Gasgenerator 2a und dem Füllrohr 3a wird auf den nicht vom Adapter 4a umschlossenen Anschlußabschnitt des Gasgenerators 2a eine Adapterabdeckung 4b aufgesetzt. Diese ist halbzylinderförmig ausgebildet. An einer Stirnseite des Halbzylinders ist ein halbkreisförmiger Flansch 48a ausgebildet. Die Erstreckung der Adapterabdeckung 4b in Richtung der Längsachse des Halbzylinders entspricht der des Adapters 4a. Auf der dem Gasgenerator 2a zugewandten Seite der Adapterabdeckung 4b sind zu beiden Längsseiten der rinnenförmigen Ausnehmung der Seite 47a Auflageflächen 46b ausgebildet, die entsprechend den Auflageflächen 46a des Adapters gestaltet sind.

Im montierten Zustand umschließt die Adapterabdeckung 4b den Anschlussabschnitt des Gasgenerators 2a, der nicht von der rinnenförmigen Ausnehmung 43a des Adapters 4a umschlossen ist. Dabei liegen die Auflageflächen 46b der Adapterabdeckung 4b auf den Auflageflächen 46a des Adapters 4a auf. Die Adapterabdeckung 4b bildet zusammen mit dem Adapter 4a durch ihre dem Gasgenerator 2a zugewandten Außenflächen 47a, 42a einen Strömungskanal um den Abströmabschnitt 2b des Gasgenerators 2a herum aus, so dass Gas aus den Abströmöffnungen 21 und diesen gegenüberliegenden weiteren oder um den Abströmabschnitt 2b herum verteilten Abströmöffnungen in diesen Strömungskanal strömen kann. Es besteht aber auch die Möglichkeit, dass die Adapterabdeckung 4b nicht dargestellte Ausströmöffnungen des Gasgenerators 2a, die bevorzugt den Ausströmöffnungen 21 gegenüberliegen, abdichtet. Die Anlageflansche 48a, 48b des Adapters 4a und der Adapterabdeckung 4b liegen an ihren Rändern aneinander an. Adapter 4a und Adapterabdeckung 4b weisen zusammen im montierten Zustand im Querschnitt eine etwa tropfenförmige Gestalt auf.

Zur Fixierung des Adapters 4a und der Adapterabdeckung 4b ist eine Schelle 5a vorgesehen, die im montierten Zustand am Außenumfang des Adapters 4a und der Adapterabdeckung 4b anliegt. Durch die Wölbung der Außenseiten 49a des Adapters 4a wird die Krafteinleitung beim Aufblasen des Gassacks 7 in den Adapter 4a und damit in die Schelle 5a optimiert. Um eine genaue Positionierung auf dem Adapter 4a und der Adapterabdeckung 4b zu sichern und um ein seitliches Verrutschen der Schelle 5a auf dem Adapter 4a und der Adapterabdeckung 4b zu verhindern, liegt die Schelle 5a an den seitlichen Flanschen 48a, 48b an. Die Schelle 5a weist einen zweiteiligen Befestigungsabschnitt 52a auf, der im montierten Zustand auf der vom Adapter 4a weggewandten Seite des Füllrohrs 3a angeordnet ist. Beide Teile des Befestigungsabschnitts 52a werden durch Befestigungselemente 53a, insbesondere Bolzen, miteinander verbunden. Im montierten Zustand umschließt die Schelle 5a die Anordnung aus Adapterabdeckung 4b, Gasgenerator 2a, Adapter 4a und Füllrohr 3a vollständig. Ein teilweises Umschließen ist aber ebenso denkbar.

Die Anbindung der Ausführungsform -der Figuren 5 bis 7 an einen Gassack 7 kann in ähnlicher oder identischer Weise wie bei der ersten Ausführungsform erfolgen.

### Bezugszeichenliste

- 1,1a: Insassenschutzeinrichtung
- 2, 2a: Gasgenerator
- 2b: Abströmabschnitt
- 3, 3a: Füllrohr
- 4, 4a: Adapter
- 4b: Adapterabdeckung
- 5, 5a: Schelle
- 7: Gassack
- 21: Abströmöffnung des Gasgenerators
- 22: Gassack
- 23: gegenüber liegende Abströmöffnung des Gasgenerators
- 31: Abströmöffnungen des Füllrohrs
- 32: Rohrenden des Füllrohrs
- 33, 33a: Außenwand des Füllrohrs
- 34, 34a: Einströmöffnung des Füllrohrs
- 41, 41 a: Durchgangsloch des Adapters
- 42, 42a: dem Gasgenerator zugewandte Außenseite des Adapters
- 43, 43a: rinnenförmige Ausnehmung
- 44, 44a: die der Außenwand des Füllrohres zugewandte Außenseite des Adapters
- 45, 45a: rinnenförmige Ausnehmung
- 46a: Auflagefläche des Adapters 4
- 46b: Auflagefläche der Adapterabdeckung 4b
- 47a: dem Gasgenerator zugewandte Seite der Adapterabdeckung 4b
- 48a: Anlageflansch der Adapterabdeckung 4b
- 48b: Anlageflansch des Adapters 4a
- 49a: Längsseiten des Adapters 4a
- 51: Befestigungsohren der Schelle 5
- 52a: Befestigungsabschnitt der Schelle 5a
- 53a: Befestigungselement
- 71: Schlauchschellen
- 72: Befestigungsschlaufen des Gassacks

## Patentansprüche

1. Insassenschutzeinrichtung (1, 1a) mit einem Gasgenerator (2, 2a) und einem mit dem Gasgenerator (2, 2a) in Verbindung stehenden Füllrohr (3, 3a) zum Aufblasen eines Gassacks (7) der Insassenschutzeinrichtung (1, 1a), wobei das Füllrohr (3, 3a) zwischen seinen beiden Rohrenden (32) an seiner Außenwand (33, 33a) mindestens eine Einströmöffnung (34, 34a) aufweist und dass zumindest ein Adapter (4, 4a) vorhanden ist, der eine Gasverbindung zwischen dem Gasgenerator (2, 2a) und der mindestens einen Einströmöffnung (34, 34a) gewährleistet,
**dadurch gekennzeichnet, dass**
der Adapter (4, 4a) mittels einer Klemmverbindung (5, 5a) zwischen dem Gasgenerator (2, 2a) und der Außenwand (33, 33a) des Füllrohres (3, 3a) eingeklemmt ist.

2. Insassenschutzeinrichtung nach Anspruch 1 **dadurch gekennzeichnet, dass** die Gasverbindung zwischen dem Gasgenerator (2, 2a) und der Einströmöffnung (34, 34a) derart abgedichtet ist, dass kein Gas nach außen entweichen kann.

3. Insassenschutzeinrichtung nach einem der vorangehenden Ansprüche, **dadurch gekennzeichnet, dass** der Gasgenerator (2, 2a), der Adapter (4, 4a) und das Füllrohr (3, 3a) mit einer Schelle (5, 5a) verbunden, insbesondere aufeinander gepresst, sind.

4. Insassenschutzeinrichtung nach Anspruch 3, **dadurch gekennzeichnet, dass** die Schelle mit einer Spannschraube gespannt ist.

5. Insassenschutzeinrichtung nach Anspruch 3, **dadurch gekennzeichnet, dass** die Schelle (5, 5a) eine Ein-Ohr- oder eine Mehr-Ohr-Schelle, insbesondere eine Zwei-Ohr-Schelle, ist.

6. Insassenschutzeinrichtung nach einem der vorangehenden Ansprüche, **dadurch gekennzeichnet, dass** im Verbindungsbereich zwischen dem Gasgenerator (2, 2a) und dem Adapter (4, 4a) die dem Gasgenerator (2, 2a) zugewandte Außenseite (42, 42a) des Adapters (4, 4a) an die äußere Form des Gasgenerators (2, 2a) angepasst ist.

7. Insassenschutzeinrichtung nach einem der vorangehenden Ansprüche, **dadurch gekennzeichnet, dass** im Verbindungsbereich zwischen der Außenwand (33, 33a) des Füllrohres (3, 3a) und dem Adapter (4, 4a) die der Außenwand (33, 33a) des Füllrohres (3, 3a) zugewandte Außenseite (44, 44a) des Adapters (4, 4a) an die äußere Form der Außenwand (33, 33a) des Füllrohres (3, 3a) angepasst ist.

8. Insassenschutzeinrichtung nach einem der vorangehenden Ansprüche, **dadurch gekennzeichnet, dass** der Gasgenerator (2, 2a) - zumindest partiell - einen runden oder ovalen Querschnitt aufweist und die dem Gasgenerator (2, 2a) zugewandte Außenseite (42, 42a) des Adapters (4, 4a) eine rinnenförmige Ausnehmung (43, 43a) aufweist, die zur äußeren Form des Gasgenerators (2, 2a) komplementär ist.

9. Insassenschutzeinrichtung nach einem der vorangehenden Ansprüche, **dadurch gekennzeichnet, dass** das Füllrohr (3, 3a) - zumindest partiell - einen runden oder ovalen Querschnitt aufweist und die dem Füllrohr (3, 3a) zugewandte Außenseite (44, 44a) des Adapters (4, 4a) eine rinnenförmige Ausnehmung (45, 45a) aufweist, die zur äußeren Form des Füllrohres (3, 3a) komplementär ist.

10. Insassenschutzeinrichtung nach einem der vorangehenden Ansprüche, **dadurch gekennzeichnet, dass** sich die rinnenförmigen Ausnehmungen (43, 43a, 45, 45a) des Adapters (4, 4a) gegenüberliegen.

11. Insassenschutzeinrichtung nach einem der vorangehenden Ansprüche, **dadurch gekennzeichnet, dass** der Adapter (4, 4a) im Anschlussbereich an den Gasgenerator (2, 2a) und/oder im Anschlussbereich an das Füllrohr- (3, 3a) eine Gasdichtung aufweist.

12. Insassenschutzeinrichtung nach Anspruch 11, **dadurch gekennzeichnet, dass** die Gasdichtung durch einen O-Ring gebildet ist, der in einer ringförmigen Nut des Adapters (4, 4a) angeordnet ist.

13. Insassenschutzeinrichtung nach einem der vorangehenden Ansprüche, **dadurch gekennzeichnet, dass** an dem Adapter (4a) eine Adapterabdeckung 4b anliegt, wobei ein Abströmbereich 2b des Gasgenerators 2a von dem Adapter (4a) und der Adapterabdeckung (4b) umschlossen ist.

14. Insassenschutzeinrichtung nach Anspruch 13, **dadurch gekennzeichnet, dass** der Adapter (4a) und die Adapterabdeckung (4b) jeweils einen Anlageflansch (48a, 48b) aufweisen.

15. Insassenschutzeinrichtung nach Anspruch 13 oder 14, **dadurch gekennzeichnet, dass** der Adapter (4a) und die Adapterabdeckung (4b) von der Schelle (5a) umfangen werden und durch die Schelle (5a) am Gasgenerator (2a) und am Füllrohr (3a) befestigt werden.

16. Insassenschutzeinrichtung nach Anspruch 14 oder 15, **dadurch gekennzeichnet, dass** die Schelle (5a) an den Anlageflanschen (48a, 48b) anliegt.

17. Insassenschutzeinrichtung nach einem der vorangehenden Ansprüche, **dadurch gekennzeichnet, dass** die Außenseiten des Adapters (4, 4a), die nicht unmittelbar an dem Gasgenerator (2, 2a) oder dem Füllrohr (3, 3a) anliegen, nach außen gewölbt ausgebildet sind.

18. Insassenschutzeinrichtung nach einem der vorangehenden Ansprüche, **dadurch gekennzeichnet, dass** der Gasgenerator (2, 2a) eine der einen Abströmöffnung (21) gegenüber liegende, weitere Abströmöffnung (23) aufweist und dass die Schelle (5, 5a) die gegenüber liegende, weitere Abströmöffnung (23) zumindest teilweise abdichtet.

19. Insassenschutzeinrichtung nach Anspruch 18, **dadurch gekennzeichnet, dass** zur Abdichtung der gegenüber liegenden Abströmöffnung (23) ein Dichtelement (22) vorhanden ist.

20. Insassenschutzeinrichtung nach einem der Ansprüche 1 bis 17, **dadurch gekennzeichnet, dass** der Adapter (4) und die Adapterabdeckung (4b) mit ihren dem Abströmabschnitt (2b) des Gasgenerators (2a) zugewandten Außenseiten (42a, 47a) einen Strömungsraum, insbesondere einen Strömungskanal, ausbilden.

## Claims

1. Occupant protection device (1, 1a) with a gas generator (2, 2a) and a filling tube (3, 3a) which is connected to the gas generator (2, 2a) and is intended for inflating an airbag (7) of the occupant protection device (1, 1a), the filling tube (3, 3a) having at least one inlet opening (34, 34a) on its outer wall (33, 33a) between its two tube ends (32), and being present at least one adapter (4, 4a) which ensures a gas connection between the gas generator (2, 2a) and the at least one inlet opening (34, 34a), **characterized in that** the adapter (4, 4a) is clamped between the gas generator (2, 2a) and the outer wall (33, 33a) of the filling tube (3, 3a) by means of a clamping connection (5, 5a) .

2. Occupant protection device according to Claim 1, **characterized in that** the gas connection between the gas generator (2, 2a) and the inlet opening (34, 34a) is sealed in such a manner that gas cannot escape to the outside.

3. Occupant protection device according to one of the preceding claims, **characterized in that** the gas generator (2, 2a), the adapter (4, 4a) and the filling tube (3, 3a) are connected by a clip (5, 5a), in particular are pressed onto one another.

4. Occupant protection device according to Claim 3, **characterized in that** the clip is tensioned by a tensioning screw.

5. Occupant protection device according to Claim 3, **characterized in that** the clip (5, 5a) is a single-eared or a multi-eared clip, in particular a two-eared clip.

6. Occupant protection device according to one of the preceding claims, **characterized in that**, in the connecting region between the gas generator (2, 2a) and the adapter (4, 4a), the outside (42, 42a) of the adapter (4, 4a), which side faces the gas generator (2, 2a), is matched to the external shape of the gas generator (2, 2a).

7. Occupant protection device according to one of the preceding claims, **characterized in that**, in the connecting region between the outer wall (33, 33a) of the filling tube (3, 3a) and the adapter (4, 4a), the outside (44, 44a) of the adapter (4, 4a), which side faces the outer wall (33, 33a) of the filling tube (3, 3a), is matched to the external shape of the outer wall (33, 33a) of the filling tube (3, 3a).

8. Occupant protection device according to one of the preceding claims, **characterized in that** the gas generator (2, 2a) has - at least partially - a round or oval cross section and the outside (42, 42a) of the adapter (4, 4a), which side faces the gas generator (2, 2a), has a channel-shaped recess (43, 43a) which is complementary to the external shape of the gas generator (2, 2a).

9. Occupant protection device according to one of the preceding claims, **characterized in that** the filling tube (3, 3a) has - at least partially - a round or oval cross section and the outside (44, 44a) of the adapter (4, 4a), which side faces the filling tube (3, 3a), has a channel-shaped recess (45, 45a) which is complementary to the external shape of the filling tube (3, 3a).

10. Occupant protection device according to one of the preceding claims, **characterized in that** the channel-shaped recesses (43, 43a, 45, 45a) of the adapter (4, 4a) lie opposite one another.

11. Occupant protection device according to one of the preceding claims, **characterized in that** the adapter (4, 4a) has a gas seal in the connecting region to the gas generator (2, 2a) and/or in the connecting region to the filling tube (3, 3a).

12. Occupant protection device according to Claim 11, **characterized in that** the gas seal is formed by an O-ring which is arranged in an annular groove of the adapter (4, 4a).

13. Occupant protection device according to one of the preceding claims, **characterized in that** an adapter covering (4b) rests on the adapter (4a), with an outlet region (2b) of the gas generator (2a) being enclosed by the adapter (4a) and the adapter covering (4b).

14. Occupant protection device according to Claim 13, **characterized in that** the adapter (4a) and the adapter covering (4b) each have a bearing flange (48a, 48b).

15. Occupant protection device according to Claim 13 or 14, **characterized in that** the adapter (4a) and the adapter covering (4b) are surrounded by the clip (5a) and are fastened to the gas generator (2a) and to the filling tube (3a) by the clip (5a).

16. Occupant protection device according to Claim 14 or 15, **characterized in that** the clip (5a) rests against the bearing flanges (48a, 48b).

17. Occupant protection device according to one of the preceding claims, **characterized in that** the outsides of the adapter (4, 4a), which outsides do not rest directly on the gas generator (2, 2a) or the filling tube (3, 3a), are of outwardly curved design.

18. Occupant protection device according to one of the preceding claims, **characterized in that** the gas generator (2, 2a) has a further outlet opening (23) lying opposite the one outlet opening (21), and **in that** the clip (5, 5a) at least partially seals the opposite, further outlet opening (23).

19. Occupant protection device according to Claim 18, **characterized in that** there is a sealing element (22) for sealing the opposite outlet opening (23).

20. Occupant protection device according to one of Claims 1 to 17, **characterized in that** the adapter (4) and the adapter covering (4b) form a flow space, in particular a flow passage, with their outsides (42a, 47a) which face the outlet section (2b) of the gas generator (2a).

## Revendications

1. Dispositif de protection de passager (1, 1a) avec un générateur à gaz (2, 2a) et un tube de remplissage (3, 3a) disposé en liaison avec le générateur à gaz (2, 2a) pour gonfler un sac à gaz (7) du dispositif de protection de passager (1, 1a), le tube de remplissage (3, 3a) comportant entre ses deux extrémités de tube (32) sur sa paroi extérieure (33, 33a) au moins un orifice d'admission (34, 34a), et au moins un adaptateur (4, 4a) étant prévu qui garantit une liaison de gaz entre le générateur à gaz (2, 2a) et le au moins un orifice d'admission (34, 34a),
**caractérisé en ce que**
l'adaptateur (4, 4a) est serré entre le générateur à gaz (2, 2a) et la paroi extérieure (33, 33a) du tube de remplissage (3, 3a) au moyen d'un accouplement de serrage (5, 5a).

2. Dispositif de protection de passager selon la revendication 1, **caractérisé en ce que** la liaison de gaz entre le générateur à gaz (2, 2a) et l'orifice d'admission (34, 34a) est étanchée de telle manière que du gaz ne puisse pas se dégager vers l'extérieur.

3. Dispositif de protection de passager selon l'une des revendications précédentes, **caractérisé en ce que** le générateur à gaz (2, 2a), l'adaptateur (4, 4a) et le tube de remplissage (3, 3a) sont reliés plus particulièrement pressés l'un contre l'autre par un collier (5, 5a).

4. Dispositif de protection de passager selon la revendication 3, **caractérisé en ce que** le collier est serré avec une vis de serrage.

5. Dispositif de protection de passager selon la revendication 3, **caractérisé en ce que** le collier (5, 5a) est un collier à un oeillet ou à plusieurs oeillets, plus particulièrement un collier à deux oeillets.

6. Dispositif de protection de passager selon l'une des revendications précédentes, **caractérisé en ce que**, dans la zone de liaison entre le générateur à gaz (2, 2a) et l'adaptateur (4, 4a), la face extérieure (42, 42a) de l'adaptateur (4, 4a) tournée vers le générateur à gaz (2, 2a) est adaptée à la forme extérieure du générateur à gaz (2, 2a).

7. Dispositif de protection de passager selon l'une des revendications précédentes, **caractérisé en ce que**, dans la zone de liaison entre la paroi extérieure (33, 33a) du tube de remplissage (3, 3a) et l'adaptateur (4, 4a), la face extérieure (44, 44a) de l'adaptateur (4, 4a) tournée vers la paroi extérieure (33, 33a) du tube de remplissage (3, 3a) est adaptée à la forme extérieure de la paroi extérieure (33, 3a) du tube de remplissage (3, 3a).

8. Dispositif de protection de passager selon l'une des revendications précédentes, **caractérisé en ce que** le générateur à gaz (2, 2a) comporte - du moins partiellement - une section transversale ronde ou ovale et **en ce que** la face extérieure (42, 42a) de l'adaptateur (4, 4a) tournée vers le générateur à gaz (2, 2a) comporte un évidement en forme de goulotte (43, 43a) qui est complémentaire de la forme extérieure du générateur à gaz (2, 2a).

9. Dispositif de protection de passager selon l'une des revendications précédentes, **caractérisé en ce que** le tube de remplissage (3, 3a) comporte - du moins partiellement - une section transversale ronde ou ovale et **en ce que** la face extérieure (44, 44a) de l'adaptateur (4, 4a) tournée vers le tube de remplissage (3, 3a) comporte un évidement en forme de goulotte (45, 45a) qui est complémentaire de la forme extérieure du tube de remplissage (3, 3a).

10. Dispositif de protection de passager selon l'une des revendications précédentes, **caractérisé en ce que** les évidements en forme de goulotte (43, 43a, 45, 45a) de l'adaptateur (4, 4a) sont situés l'un en face de l'autre.

11. Dispositif de protection de passager selon l'une des revendications précédentes, **caractérisé en ce que** l'adaptateur (4, 4a) comporte un joint à gaz dans la zone de raccordement au générateur à gaz (2, 2a) et/ou dans la zone de raccordement au tube de remplissage (3, 3a).

12. Dispositif de protection de passager selon la revendication 11, **caractérisé en ce que** le joint à gaz est formé par un joint torique d'étanchéité qui est disposé dans une rainure annulaire de l'adaptateur (4, 4a).

13. Dispositif de protection de passager selon l'une des revendications précédentes, **caractérisé en ce qu'**une couverture d'adaptateur (4b) est en contact avec l'adaptateur (4a), une zone d'évacuation (2b) du générateur à gaz (2a) étant entourée de l'adaptateur (4a) et de la couverture d'adaptateur (4b).

14. Dispositif de protection de passager selon la revendication 13, **caractérisé en ce que** l'adaptateur (4a) et la couverture d'adaptateur (4b) comportent chacun une bride d'appui (48a, 48b).

15. Dispositif de protection de passager selon la revendication 13 ou 14, **caractérisé en ce que** l'adaptateur (4a) et le recouvrement d'adaptateur (4b) sont entourés du collier (5a) et fixés par le collier (5a) sur le générateur à gaz (2a) et sur le tube de remplissage (3a).

16. Dispositif de protection de passager selon la revendication 14 ou 15, **caractérisé en ce que** le collier (5a) est en contact avec les brides d'appui (48a, 48b).

17. Dispositif de protection de passager selon l'une des revendications précédentes, **caractérisé en ce que** les faces extérieures de l'adaptateur (4, 4a) qui ne sont pas en contact direct avec le générateur à gaz (2, 2a) ou avec le tube de remplissage (3, 3a) sont réalisées bombées vers l'extérieur.

18. Dispositif de protection de passager selon l'une des revendications précédentes, **caractérisé en ce que** le générateur à gaz (2, 2a) comporte un autre orifice d'évacuation (23) situé en regard de l'orifice d'évacuation (21) et **en ce que** le collier (5, 5a) assure l'étanchéité au moins en partie de l'autre orifice d'évacuation (23) situé en regard.

19. Dispositif de protection de passager selon la revendication 18, **caractérisé en ce qu'**est prévu un élément d'étanchéité (22) pour assurer l'étanchéité par rapport à l'orifice d'évacuation (23) situé en regard.

20. Dispositif de protection de passager selon l'une des revendications 1 à 17, **caractérisé en ce que** l'adaptateur (4) et la couverture d'adaptateur (4b) forment un espace d'afflux, plus particulièrement un canal d'afflux, avec leurs faces extérieures (42a, 47a) tournées vers la section d'évacuation (2b) du générateur à gaz (2a).
